# EUROPÄISCHE PATENTSCHRIFT

(11) **EP 0 901 758 B1**
(45) Veröffentlichungstag und Bekanntmachung des Hinweises auf die Patenterteilung: **11.04.2001**
(21) Anmeldenummer: 98116253.0
(22) Anmeldetag: 28.08.1998
(51) Int. Cl.: A24C 5/32, B65G 51/02

(54) **Einrichtung zum Fördern von Filterstäben**
Apparatus for transporting filter rods
Dispositif de transport de tiges de filtre

(30) Priorität: 12.09.1997 DE 19740070
(43) Veröffentlichungstag der Anmeldung: 17.03.1999
(73) Patentinhaber: Hauni Maschinenbau Aktiengesellschaft, 21033 Hamburg (DE)
(72) Erfinder: Haul, Michael, 22309 Hamburg (DE); Paech, Martin, 21395 Tespe (DE)

(56) Entgegenhaltungen:
- EP-A- 0 262 236
- DE-A- 2 306 096
- US-A- 4 178 662
- US-A- 4 311 229

## Beschreibung

Die Erfindung betrifft eine Fördereinrichtung zum Transportieren von Filterstäben, mit einer eine Sendestation mit einer Empfangsstation verbindenden pneumatischen Förderleitung, in der die Filterstäbe längsaxial gefördert und aus der sie an der Empfangsstation in eine queraxiale Förderrichtung überführt werden, und mit einer pneumatischen Steuereinrichtung.

Einrichtungen der obigen Art (siehe EP 262 236 A) bilden ein sich über relativ große Entfernungen erstreckendes Rohrleitungssystem mit geraden und gekrümmten Leitungsabschnitten, durch welche im Normalbetrieb Filterstäbe unterschiedlicher Länge und Anzahl pro Zeiteinheit mit etwa gleichbleibendem gegenseitigen Abstand mittels Druckluft transportiert werden. Um einen derartigen störungsfreien Betrieb zu gewährleisten, ist die Aufrechterhaltung eines bestimmten Rohrleitungsdruckes in Abhängigkeit der genannten Parameter unerläßlich.
In dem Fall, in welchem Leistungsschwankungen, insbesondere eine störungsbedingte verminderte Sendeleistung der Sendestation eintreten, kann es insbesondere im Bereich der Empfangsstation zu Transportstörungen oder gar Transportunterbrechungen bzw. Staus kommen.

Der Erfindung liegt die Aufgabe zugrunde, die Betriebssicherheit derartiger Fördereinrichtungen zu erhöhen.

Diese Aufgabe wird erfindungsgemäß gelöst durch ein die längsaxiale Geschwindigkeit der Filterstäbe im Bereich der Empfangsstation überwachendes Meßmittel wobei die pneumatische Steuereinrichtung die Fördergeschwindigkeit der Filterstäbe in Abhängigkeit von der Geschwindigkeitsmessung korrigiert. Eine unmittelbare Kontrolle der Korrekturmaßnahmen ist nach einer Weiterbildung dadurch gewährleistet, daß die pneumatische Steuereinrichtung - bezogen auf die Förderrichtung der Filterstäbe - dem Meßmittel stromauf zugeordnet ist.
Um die Wirksamkeit der Steuereinrichtung zu optimieren, ist außerdem vorgesehen, daß die pneumatische Steuereinrichtung im Bereich eines Endabschnitts in die pneumatische Förderleitung integriert ist.
Der Förderstrom der Filterstäbe wird auf besonders sanfte Weise dadurch beeinflußt, daß die Steuereinrichtung als vom Geschwindigkeitsmeßmittel automatisch ansteuerbares Entlüftungsventil ausgebildet ist. Zweckmäßigerweise weist das Entlüftungsventil einen den Querschnitt einer Entlüftungsbohrung der Förderleitung regulierenden, pneumatisch ansteuerbaren Drosselkolben auf.
Eine alternative Ausgestaltung zum Reduzieren der Fördergeschwindigkeit der Filterstäbe besteht darin, daß die Steuereinrichtung als bei überhöhter Fördergeschwindigkeit der Filterstäbe vom Meßmittel automatisch ansteuerbare Gegenstromdüse ausgebildet ist.
Die erfindungsgemäßen Maßnahmen sind insbesondere dort sinnvoll und wirksam, wo die Förderleitung vor Einmündung in die Empfangsstation mit einem gekrümmten Leitungsabschnitt versehen ist, welchem das Meßmittel und die Steuereinrichtung - bezogen auf die Förderrichtung - stromauf vorgeordnet sind.
Darüber hinaus werden bestimmte, die Förderung der Filterstäbe beeinflussende Förderorgane unterstützt, wenn der Förderleitung vor Einmündung in die Empfangsstation ein aus Bremsrollen und Beschleunigerrollen bestehendes Vereinzelungsmittel für die Filterstäbe zugeordnet ist, welchem das Meßmittel und die Steuereinrichtung - bezogen auf die Förderrichtung - stromauf vorgeordnet sind.

Der mit der Erfindung erzielte Vorteil besteht darin, daß bei schwankender, insbesondere sinkender Förderleistung der Sendestation ein der veränderten Menge von in der Rohrleitung befindlichen bzw. eingeleiteten Filterstäben angepaßter bzw. reduzierter Förderleitungsdruck weiterhin einen störungsfreien Transport in kritischen Rohrleitungsabschnitten, insbesondere im Bereich der Empfangsstation gewährleistet.

Die Erfindung wird nachstehend anhand von in der Zeichnung dargestellten Ausführungsbeispielen näher erläutert.

Hierbei zeigen:
- Figur 1: eine schematische Gesamtansicht einer Fördereinrichtung für Filterstäbe,
- Figur 2: eine pneumatische Entlüftungseinrichtung für eine Filterstab-Förderleitung im Längsschnitt und
- Figur 3: eine in die Förderleitung einmündende pneumatische Gegenstromdüse im Längsschnitt.

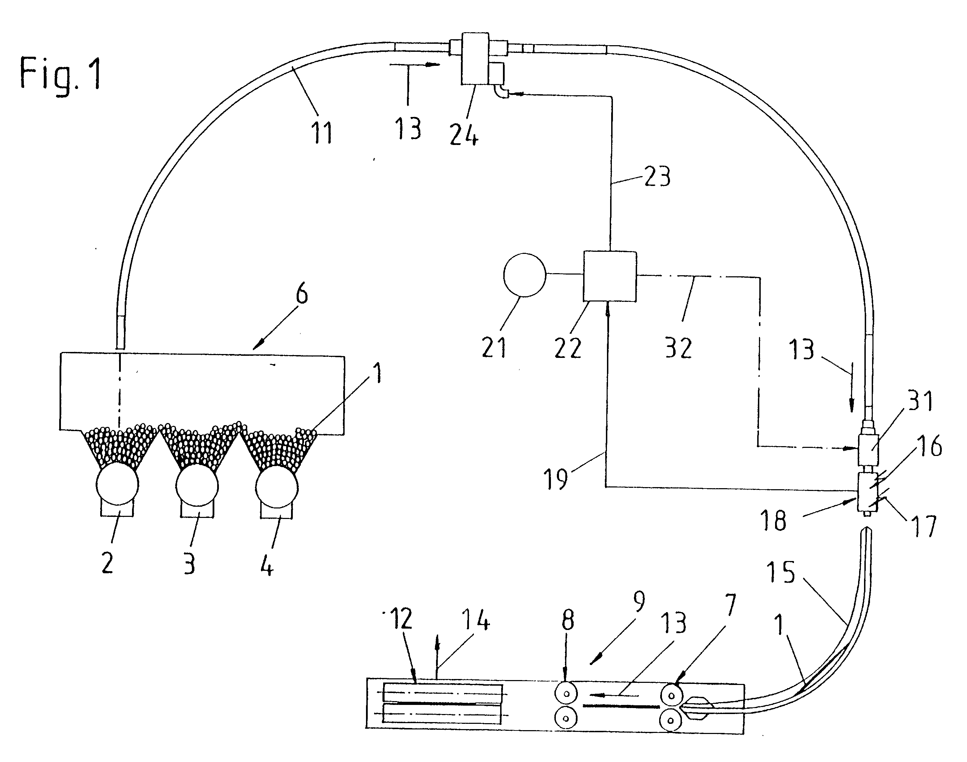

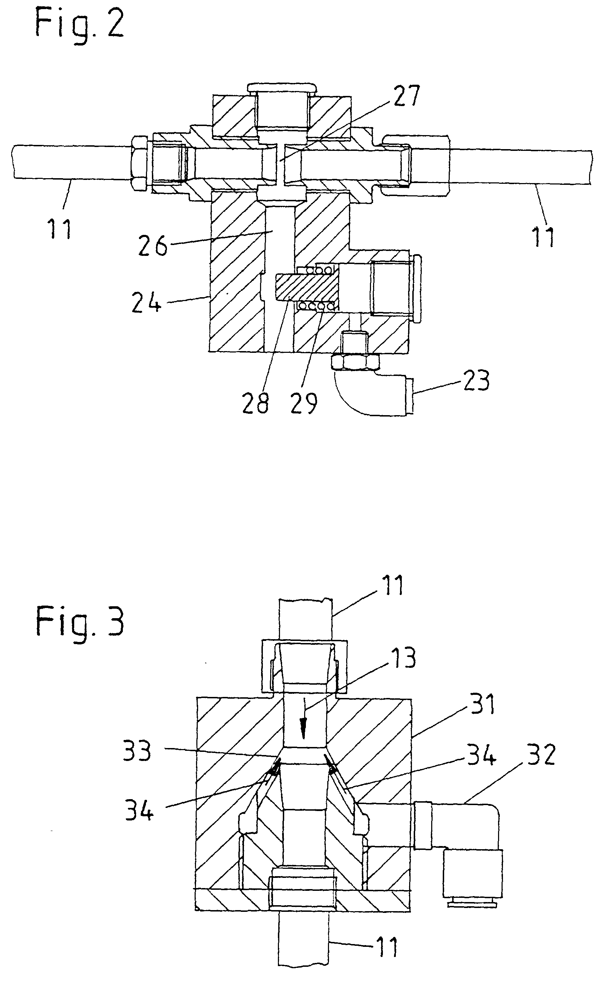

Die in Figur 1 dargestellte Fördereinrichtung für Filterstäbe 1 weist eine aus mehreren Sendeeinheiten 2, 3, 4 bestehende Sendestation 6, eine mit einem zugeordneten, ein Bremsrollenpaar 7 und ein Beschleunigerrollenpaar 8 umfassendes Vereinzelungsmittel versehene Empfangsstation 9 sowie eine die Sendestation 6 mit der Empfangsstation verbindende, mit einem in die Empfangsstation 9 einmündenden gekrümmten, offenen Leitungsabschnitt 15 versehene pneumatische Förderleitung 11 für jeweils eine der Sendeeinheiten auf.
Weitere Einzelheiten der Sendestation 6 und der außerdem mit Quertransportmitteln 12 zum Überführen der Filterstäbe 1 aus der längsaxialen Förderrichtung (Pfeile 13) in eine queraxiale Förderrichtung (Pfeil 14) ausgestatteten Empfangsstation 9 sind beispielsweise in der deutschen Patentschrift 35 38 660 bzw. der korrespondierenden US-Patentschrift 4 710 066 offenbart.
Bezogen auf die Förderrichtung (Pfeile 13) der Filterstäbe 1 stromauf der Empfangsstation 9 bzw. stromauf des gekrümmten Leitungsabschnitts 15 befindet sich in dem an die Empfangsstation 9 angrenzenden Bereich der Förderleitung 11 ein mit zwei Lichtschranken 16 und 17 ausgestattetes Meßmittel 18 zum Überwachen der längsaxialen Fördergeschwindigkeit der Filterstäbe 1.
Das Meßmittel 18 ist über eine elektrische Steuerleitung 19 mit einem an eine Druckluftquelle 21 angeschlossenen Vorsteuerventil 22 verbunden, welches wiederum über eine pneumatische Steuerleitung 23 mit einer ca. fünfzehn Meter vor dem Leitungsende der mehrere hundert Meter langen Förderleitung 11 in die Förderleitung integrierten, als Entlüftungsventil ausgebildeten Steuereinrichtung 24 verbunden ist.
Die Steuereinrichtung 24 weist gemäß Figur 2 eine Entlüftungsbohrung 26 für die innerhalb des Entlüftungsventils 24 durch einen Ringspalt 27 unterbrochene Förderleitung 11 auf.
Der Querschnitt der Entlüftungsbohrung 26 ist automatisch durch einen Drosselkolben 28 regulierbar. In dem dieser über die pneumatische Steuerleitung 23 gegen den Druck einer Rückstellfeder 29 mit Druckluft beaufschlagbar ist.

Die Fördereinrichtung wird normalerweise für Filterstäbe definierter Länge und Durchsatz pro Zeiteinheit mit einem bestimmten langfristig konstantgehaltenen pneumatischen Förderdruck betrieben, so daß auch kritische Förderabschnitte, wie z. B. im Bereich des gekrümmten Leitungsabschnitts 15, des Vereinzelungsmittels 7, 8 oder der Umlenkzone der Quertransportmittel 12 störungsfrei bewältigt werden.

Wenn sich jedoch der Zustand der aufeinander abgestimmten Parameter beispielsweise dadurch ändert, daß die Sendestation 6 mit verminderter Leistung arbeitet oder gar ausfällt, wird aufgrund der in geringerer Zahl zugeführten bzw. ausbleibenden Filterstäbe 1 auf die noch in der Förderleitung 11 befindlichen Filterstäbe ein zu großer Förderdruck ausgeübt, der ihre Fördergeschwindigkeit soweit erhöhen kann, daß sie sich im gekrümmten Leitungsabschnitt 15 aufstauen und ihre Vereinzelung durch die Bremsrollen 7 und die Beschleunigungsrollen 8 behindert wird.
Eine derartige Geschwindigkeitszunahme wird beim Passieren der beiden Lichtschranken 16 und 17 des Meßmittels 18 erfaßt und entsprechend ein Steuersignal auf das Vorsteuerventil 22 gegeben, welches einen adäquaten verminderten Steuerdruck auf den Drosselkolben 28 ausübt, welcher aus der Entlüftungsbohrung 26 zurückgezogen wird und deren Querschnitt damit vergrößert bzw. freigibt, wodurch die Förderleitung 11 gesteuert entlüftet wird. Auf diese Weise werden die noch in der Förderleitung 11 befindlichen Filterstäbe 1 mit der vorgegebenen Geschwindigkeit störungsfrei in die Empfangstation 9 und anschließend in die queraxiale Förderrichtung 14 überführt.
Alternativ zur Steuereinrichtung 24 ist kurz vor dem Ende der Förderleitung 11 stromauf vor dem Meßmittel 18 eine in Figur 3 näher dargestellte, als Gegenstromdüse ausgebildete, in die Förderleitung 11 integrierte Steuereinrichtung 31 vorgesehen, welche ebenfalls mit dem Vorsteuerventil 22 durch eine pneumatische Steuerleitung 32 verbunden ist. Die Steuereinrichtung 31 ist mit einer schräg entgegen der Förderrichtung 13 der Filterstäbe 1 in die Förderleitung 11 einmündenden Ringdüse 33 versehen, durch die bei dem zuvor beschriebenen Betriebszustand über das entsprechend ausgelegte Vorsteuerventil 22 Bremsluft (Pfeil 34) entgegen den zugeführten Filterstäben in die Förderleitung 11 eingebracht wird und dabei den gleichen Effekt erzeugt wie die Entlüftung der Förderleitung 11.

## Patentansprüche

1. Fördereinrichtung zum Transportieren von Filterstäben, mit einer eine Sendestation (6) mit einer Empfangsstation (9) verbindenden pneumatischen Förderieitung (11), in der die Filterstäbe (1) längsaxial gefördert und aus der sie an der Empfangsstation (9) in eine queraxiale Förderrichtung überführt werden, und mit einer pneumatischen Steuereinrichtung, gekennzeichnet durch ein die längsaxiale Geschwindigkeit der Filterstäbe (1) im Bereich der Empfangsstation (9) überwachendes Meßmittel (18), wobei die pneumatische Steuereinrichtung (24 bzw. 31) die Fördergeschwindigkeit der Filterstäbe in Abhängigkeit von der Geschwindigkeitsmessung korrigiert.

2. Fördereinrichtung nach Anspruch 1, dadurch gekennzeichnet, daß die pneumatische Steuereinrichtung (24 bzw. 31) - bezogen auf die Förderrichtung - (Pfeil 13) der Filterstäbe (1) dem Meßmittel (18) stromauf zugeordnet ist.

3. Fördereinrichtung nach Anspruch 1 oder 2, dadurch gekennzeichnet, daß die pneumatische Steuereinrichtung (24 bzw. 31) im Bereich eines Endabschnitts in die pneumatische Förderleitung (11) integriert ist.

4. Fördereinrichtung nach einem der Ansprüche 1 bis 3, dadurch gekennzeichnet, daß die Steuereinrichtung (24) als vom Geschwindigkeits-Meßmittel (18) automatisch ansteuerbares Entlüftungsventil ausgebildet ist.

5. Fördereinrichtung nach Anspruch 4, dadurch gekennzeichnet, daß das Entlüftungsventil (24) einen den Querschnitt einer Entlüftungsbohrung (26) der Förderleitung (11) regulierenden, pneumatisch ansteuerbaren Drosselkolben (28) aufweist.

6. Fördereinrichtung nach einem der Ansprüche 1 bis 3, dadurch gekennzeichnet, daß die Steuereinrichtung (31) als bei überhöhter Fördergeschwindigkeit der Filterstäbe (1) vom Meßmittel (18) automatisch ansteuerbare Gegenstromdüse ausgebildet ist.

7. Fördereinrichtung nach einem der Ansprüche 1 bis 6 dadurch gekennzeichnet, daß die Förderleitung (11) vor Einmündung in die Empfangsstation (9) mit einem gekrümmten Leitungsabschnitt (15) versehen ist, welchem das Meßmittel (18) und die Steuereinrichtung (24 bzw. 31) - bezogen auf die Förderrichtung (13) - stromauf vorgeordnet sind.

8. Fördereinrichtung nach einem der Ansprüche 1 bis 7, dadurch gekennzeichnet, daß der Förderleitung (11) vor Einmündung in die Empfangsstation (9) ein aus Bremsrollen (7) und Beschleunigerrollen (8) bestehendes Vereinzelungsmittel für die Filterstäbe (1) zugeordnet ist, welchem das Meßmittel (18) und die Steuereinrichtung (24 bzw. 31) - bezogen auf die Förderrichtung (Pfeil 13) - stromauf vorgeordnet sind.

## Claims

1. Feed apparatus for transporting filter rods, comprising a pneumatic feed line (11) connecting a sending station (6) to a receiving station (9) and in which the filter rods (1) are longitudinally axially conveyed and from which they are transferred to a cross-axial feed direction at the receiving station (9), and comprising a pneumatic control device, characterised by a measuring means (18) monitoring the longitudinal axial speed of the filter rods (1) in the region of the receiving station (9), the pneumatic control device (24, 31) correcting the feed rate of the filter rods as a function of the speed measurement.

2. Feed apparatus according to claim 1, characterised in that the pneumatic control device (24, 31) for the filter rods (1) is arranged upstream of the measuring means (18) relative to the feed direction (arrow 13).

3. Feed apparatus according to claim 1 or 2, characterised in that the pneumatic control device (24, 31) is incorporated into the pneumatic feed line (11) in the region of an end portion.

4. Feed apparatus according to any one of claims 1 to 3, characterised in that the control device (24) is formed as a vent valve automatically actuatable by the speed-measuring means (18).

5. Feed apparatus according to claim 4, characterised in that the vent valve (24) has a pneumatically actuatable choke plunger (28) regulating the cross-section of an air vent (26) of the feed line (11).

6. Feed apparatus according to any one of claims 1 to 3, characterised in that the control device (31) is formed as a countercurrent nozzle automatically actuatable by the measuring means (18) when the feed rate of the filter rods (1) is too high.

7. Feed apparatus according to any one of claims 1 to 6, characterised in that the feed line (11) is provided with a curved line portion (15) before it leads into the receiving station (9), the measuring means (18) and the control device (24, 31) being arranged upstream of the curved line portion (15) relative to the feed direction (13).

8. Feed apparatus according to any one of claims 1 to 7, characterised in that a separating means for the filter rods (1), comprising braking rollers (7) and accelerating rollers (8), is associated with the feed line (11) before it leads into the receiving station (9), the measuring means (18) and the control device (24, 31) being arranged upstream of the separating means relative to the feed direction (arrow 13).

## Revendications

1. Dispositif de transport pour l'acheminement de tiges de filtre, comportant un conduit de transport pneumatique (11) reliant un poste d'expédition (6) à un poste de réception (9), conduit de transport dans lequel les tiges de filtre (1) sont transportées suivant la direction de leur axe et hors duquel elles sont transférées, au poste de réception (9), dans une direction de transport transversale à leur axe, ainsi qu'un dispositif de commande pneumatique, caractérisé par un moyen de mesure (18) contrôlant la vitesse des tiges de filtre (1) en direction axiale dans la région du poste de réception (9), le dispositif de commande pneumatique (24 ou 31) corrigeant alors la vitesse de transport des tiges de filtre en fonction de la mesure de vitesse.

2. Dispositif de transport selon la revendication 1, caractérisé en ce que le dispositif de commande pneumatique (24 ou 31) est associé au moyen de mesure (18) en amont de celui-ci - relativement à la direction de transport (flèche 13) des tiges de filtre (1)-.

3. Dispositif de transport selon la revendication 1 ou 2, caractérisé en ce que le dispositif de commande pneumatique (24 ou 31) est intégré dans le conduit de transport pneumatique (11), dans la région d'un tronçon d'extrémité.

4. Dispositif de transport selon l'une des revendications 1 à 3, caractérisé en ce que le dispositif de commande (24) est conçu sous forme d'une soupape d'échappement d'air pouvant être commandée, de façon automatique, par le moyen de mesure de vitesse (18).

5. Dispositif de transport selon la revendication 4, caractérisé en ce que la soupape d'échappement d'air (24) comporte un piston d'étranglement à commande pneumatique (28), réglant la section transversale d'un perçage d'échappement d'air (26) du conduit de transport (11).

6. Dispositif de transport selon l'une des revendications 1 à 3, caractérisé en ce que le dispositif de commande (31) est conçu sous la forme d'une buse agissant à contre-courant, pouvant être commandée de façon automatique par le moyen de mesure (18) en cas de vitesse excessive de transport des tiges de filtre (1).

7. Dispositif de transport selon l'une des revendications 1 à 6, caractérisé en ce que le conduit de transport (11), avant de déboucher dans le poste de réception (9), est pourvu d'un tronçon incurvé de conduit (15), en amont duquel - relativement à la direction de transport (13) - sont disposés le moyen de mesure (18) et le dispositif de commande (24 ou 31).

8. Dispositif de transport selon l'une des revendications 1 à 7, caractérisé en ce qu'au conduit de transport (11) est associé, avant le point où il débouche dans le poste de réception (9), un moyen de séparation une à une des tiges de filtre (1), qui est constitué de galets de freinage (7) et de galets accélérateurs (8) et en amont duquel - relativement à la direction de transport (flèche 13) - sont disposés le moyen de mesure (18) et le dispositif de commande (24 ou 31).
